# EUROPEAN PATENT APPLICATION

(11) **EP 4 454 828 A1**
(43) Date of publication of application: **30.10.2024**
(21) Application number: 23219012.4
(22) Date of filing: 21.12.2023
(51) Int. Cl.: B25J 9/16, B25J 13/08

(54) **ROBOTIC ARM AND SAFETY CONTROL METHOD THEREOF**

(30) Priority: 28.12.2022 CN 202211692906
(71) Applicant: KUKA Robotics Guangdong Co., Ltd., Foshan, Guangdong 528311 (CN); Guangdong MIDEA Refrigeration Equipment Co., Ltd., 528311 Foshan City Guangdong (CN); Midea Group Co., Ltd., Foshan, Guangdong 528311 (CN); KUKA Robot Manufacturing Shanghai Co., Ltd., Shanghai (CN)
(72) Inventor: WEN, YUANMING, Beijiao Town, Shunde District, Foshan City, 528311 (CN); LIU, ZHICHUAN, Beijiao Town, Shunde District, Foshan City, 528311 (CN); DING, CHENGRUN, Beijiao Town, Shunde District, Foshan City, 528311 (CN); TANG, JIAN, Shanghai (CN); ZHU, LEI, Shanghai (CN)
(74) Representative: Oelke, Jochen

(57) **Abstract**

The present disclosure provides a robotic arm and a safety control method thereof. The robotic arm includes a plurality of joints and a plurality of acceleration sensors, and different the plurality of acceleration sensors are arranged on different the plurality of joints. The method includes: determining that a collision occurs in the robotic arm, and obtaining a first motion information of each joint through a corresponding acceleration sensor; determining a position information and a collision force information of the collision occurring based on the first motion information; and obtaining a safety control strategy based on the position information and the collision force information, and controlling the robotic arm to execute the safety control strategy. The present disclosure obtains the first motion information of the joint or joints in the region by means of the acceleration sensor(s) arranged on the joint(s), for determining the position information and collision force information of a collision occurring based on the first motion information, obtains a corresponding safety control strategy based on the position information and the collision force information, and controls the robotic arm to execute the safety control strategy, which is capable of realizing the collision detection of the robotic arm with a high degree of accuracy and a high degree of sensitivity.

## Description

### TECHNICAL FIELD

The present disclosure relates to the field of safety control technology for industrial robots, and in particular to a robotic arm and a safety control method thereof.

### BACKGROUND

With the advancement of industrial automation, the use of industrial robots is increasing_{∘} While improving the operation efficiency, the safety function technology of the industrial robots has become a top priority in research and development design. In particular, collaborative robots are distinguished from traditional industrial robots, where the collaborative robots can work with human operators to safely and efficiently complete non-cognitive tasks; human operators can interact and collaborate with the collaborative robots in the same workspace and can drag the robots for teaching. However, due to the proximity of the working distance between the robot and the human, the human may be injured when approaching or touching the robot in the state of highspeed movement. Therefore, collision detection safety function is particularly important during the application of the collaborative robots, while collision detection methods adopted in the existing technology have low-accuracy, low-sensitivity, and high-cost problems.

### SUMMARY OF THE DISCLOSURE

Embodiments of the present disclosure provide a robotic arm and a safety control method thereof, capable of achieving high accuracy as well as high sensitivity collision detection at a low cost.

In a first aspect, the present disclosure provides a safety control method of a robotic arm; the robotic arm comprises a plurality of joints and a plurality of acceleration sensors, and different the plurality of acceleration sensors are arranged on different the plurality of joints; the method comprises:
determining that a collision occurs in the robotic arm, and obtaining a first motion information of each joint through a corresponding acceleration sensor;
determining a position information and a collision force information of the collision occurring based on the first motion information; and
obtaining a safety control strategy based on the position information and the collision force information, and controlling the robotic arm to execute the safety control strategy.

In a second aspect, the present disclosure provides a robotic arm, comprising:
a plurality of joints, configured to realize a movement of the robotic arm;
a plurality of acceleration sensors, configured to collect first motion information of the plurality of joints; wherein different the plurality of acceleration sensors are arranged on different the plurality of joints; and
a control circuit, connected to the plurality of joints, and configured to perform the method as above.

Different from the related art, the present disclosure set up the acceleration sensors on the joints, obtains the first motion information of the joint or joints in the region by means of the acceleration sensor(s) arranged on the joint(s), for determining the position information and collision force information of a collision occurring based on the first motion information, obtains a corresponding safety control strategy based on the position information and the collision force information, and controls the robotic arm to execute the safety control strategy, which is capable of realizing the collision detection of the robotic arm with a high degree of accuracy and a high degree of sensitivity.

It should be understood that the above general description and the detailed description that follows are exemplary and explanatory only and are not intended to limit the present application.

### BRIEF DESCRIPTION OF THE DRAWINGS

In order to more clearly illustrate the technical solutions in the embodiments of the present disclosure, the accompanying drawings to be used in the description of the embodiments will be briefly introduced below, and it will be obvious that the accompanying drawings in the following description are only some of the embodiments of the present disclosure, and other accompanying drawings can be obtained according to these drawings for those skilled in the art, without giving creative labor.
FIG. 1 is a structural schematic view of a robotic arm according to some embodiments of the present disclosure.
FIG. 2 is a structural schematic view of a robotic arm according to other embodiments of the present disclosure.
FIG. 3 is a structural schematic view of a robotic arm according to further other embodiments of the present disclosure.
FIG. 4 is a flowchart of a safety control method of a robotic arm according to some embodiments of the present disclosure.
FIG. 5 is a first specific flowchart of step S11 in FIG. 4.
FIG. 6 is a first specific flowchart of step S12 in FIG. 4.
FIG. 7 is a second specific flowchart of steps S11 and S12 in FIG. 4.
FIG. 8 is a specific flowchart of step S13 in FIG. 4.
FIG. 9 is a first specific flowchart of step S131 in FIG. 8.
FIG. 10 is a second specific flowchart of step S131 in FIG. 8.

### DETAILED DESCRIPTION

In order to enable those skilled in the art to better understand the technical solutions of the present disclosure, the robotic arm and the safety control method thereof provided in the present disclosure are described in further detail below in connection with the accompanying drawings and specific embodiments. It is to be understood that the described embodiments are only a part of the embodiments of the present disclosure, and not all of the embodiments. Based on the embodiments in the present disclosure, all other embodiments obtained by those skilled in the art without creative labor fall within the scope of the present disclosure.

The terms "first", "second", and the like in the present disclosure are intended to distinguish between different objects, and are not to describe a particular order. In addition, the terms "including" and "having" and any variations thereof are intended to cover non-exclusive inclusion. For example, a process, method, system, product, or apparatus that includes a series of steps or units is not limited to the listed steps or units, but optionally further includes steps or units that are not listed, or optionally includes other steps or units that are inherent to the process, method, product, or apparatus.

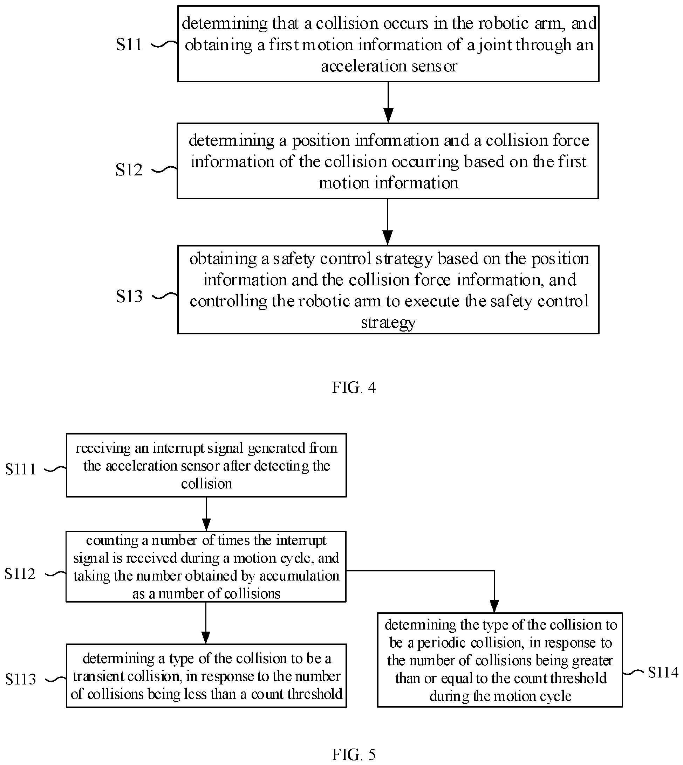

The present disclosure provides a safety control method of a robotic arm, as shown in FIG. 4, which enables high accuracy as well as high sensitivity collision detection of a robotic arm at a low cost.

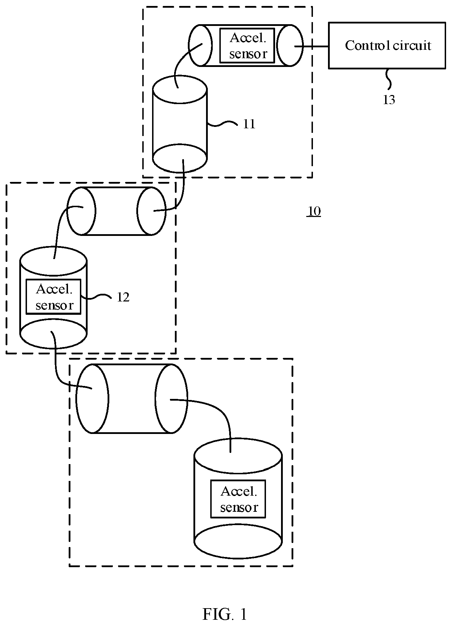

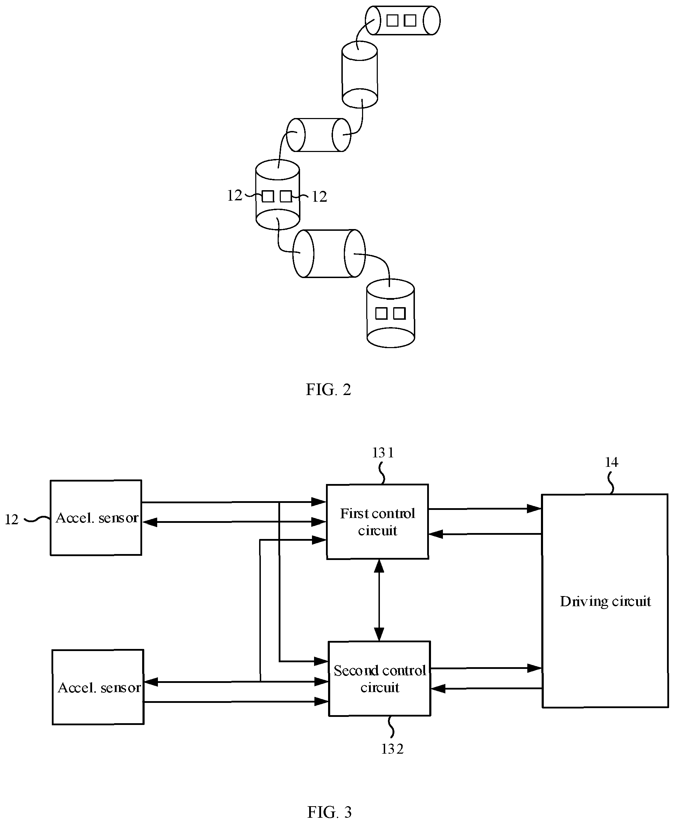

The specific structure of the robotic arm detected by the present disclosure may be as shown in FIGS. 1-FIGS. 3. Referring to FIGS. 1-FIGS. 3, FIG. 1 is a structural schematic view of a robotic arm according to some embodiments of the present disclosure, FIG. 2 is a structural schematic view of a robotic arm according to other embodiments of the present disclosure, and FIG. 3 is a structural schematic view of a robotic arm according to further other embodiments of the present disclosure.

As shown in FIG. 1, the robotic arm 10 includes multiple joints 11, multiple acceleration sensors 12, and a control circuit 13. The multiple joints 11 are configured to realize a movement of the robotic arm 10. Different acceleration sensors 12 are arranged at different joints 11, and the acceleration sensors 12 are configured to collect first motion information of the multiple joints 11.

In some embodiments, the acceleration sensor 12 may specifically be a MEMS acceleration sensor. The MEMS acceleration sensor has a relatively wide range of applications in mobile phones and sports wearable devices, and its cost is also relatively inexpensive, which can effectively reduce the production cost.

In some embodiments, each joint 11 is arranged with an acceleration sensor 12 or each joint region is arranged with an acceleration sensor 12, where the joint region includes multiple neighboring joints 11. The acceleration sensor 12 is configured to collect the first motion information of the joint 11 on which the acceleration sensor 12 is arranged, or to collect the first motion information of the multiple joints 11 within the joint region on which the acceleration sensor 12 is arranged.

For example, when the robotic arm 10 includes six axes, the acceleration sensors 12 may be arranged at the first j oint, the third j oint, and the sixth joint of the robotic arm 10 correspondingly. The first motion information of the first joint and the second joint is collected by the acceleration sensor 12 arranged at the first joint; the first motion information of the third joint and the fourth joint is collected by the acceleration sensor 12 arranged at the third joint; and the first motion information of the third joint and the fourth joint is collected by the acceleration sensor 12 arranged at the sixth j oint. That is, the first j oint and the second j oint of the robotic arm 10 form a first joint region, the third joint and the fourth joint form a second joint region, and the third joint and the fourth j oint form a third j oint region.

The control circuit 13 is connected to the multiple joints 11, and specifically may be connected to the multiple acceleration sensors 12 and a servo driver disposed within the joints 11, for determining position information and collision force information of the collision occurring in the robotic arm 10 based on the first motion information collected by the acceleration sensors 12, i.e., determining the specific joint 11 or joint region in which the collision of the robotic arm 10 occurs and the magnitude and direction of the collision force of the joint 11 or the joint region where the collision occurs. The control circuit 13 may further obtain a corresponding safety control strategy based on the position information and the collision force information.

In some embodiments, the safety control strategy may include a stopping strategy and an investigation of a collision source. The stopping strategy may include various types of stopping, which are related to different position information and different collision force information, such as a Safe Torque Off (STO) stopping type, a Safety Stop1 (SS1) stopping type, or a Safety Stop2 (SS2) stopping type, etc.

Specifically, the STO stopping type is specifically to de-energize a motor that generates the torque or force, for responding to a state in which the robotic arm 10 cannot be controlled to stop.

The SS1 stopping type is specifically to start and control motor deceleration to stop the motor within a set limit value, and to start the STO function when the motor speed is lower than a specified limit value; alternatively, to start and monitor motor deceleration to stop the motor within a set limit value, and to start the STO function when the motor speed is lower than a specified limit value; alternatively, to start motor deceleration and start the STO function after applying a specified time delay.

The SS2 stopping type is specifically to start and control motor deceleration to stop the motor within a set limit value, and to start a Safety Operation Stop (SOS) function when the motor speed is lower than a specified limit value; alternatively, to start and monitor motor deceleration to stop the motor within a set limit value, and to start the SOS function when the motor speed is lower than a specified limit value; alternatively, to start motor deceleration and start the SOS function after applying a specified time delay.

The SOS function is configured to prevent the motor from deviating from the stop position by more than a specified value, and is able to provide energy for the motor to resist external forces in the absence of external braking.

Specifically, the acceleration sensor 12 is configured to collect the second motion information of the joint 11 and generate an interrupt signal when determining that the second motion information exceeds a threshold value, and the control circuit 13 is configured to determine that a collision has occurred in the robotic arm 10 in response to the interrupt signal.

In conjunction with FIG. 1, referring further to FIG. 2, as shown in FIG. 2, the robotic arm 10 is arranged with two sets of acceleration sensors 12, which are redundantly set up. The multiple acceleration sensors 12 in each set are arranged in a corresponding joint 11, respectively. In the present embodiment, each of the joints 11 may be arranged with two redundantly set-up acceleration sensors 12 to respectively obtain the first motion information of the same joint 11.

The control circuit 13 obtains the first motion information of the joint 11 from the two redundantly arranged acceleration sensors 12, respectively, to obtain two first motion information, and determines the position information where the collision occurs and the collision force information based on the two first motion information.

In some embodiments, the control circuit 13 may cross-validate the two first motion information to improve the accuracy of the collision detection.

In other embodiments, the control circuit 13 may determine two position information and two collision force information based on the two first motion information, and cross-validate the two position information and cross-validate the two collision force information to improve the accuracy of the collision detection.

In other embodiments, the control circuit 13 may determine two position information and two collision force information based on the two first motion information, obtain corresponding two safety control strategies based on the two position information and the two collision force information, and further cross-validate the two safety control strategies to improve the accuracy of the collision detection.

In some embodiments, the control circuit 13 may specifically be a Digital Signal Processing (DSP), a Field Programmable Gate Array (FPGA), a microprocessor unit (MPU), or a System on Chip (SoC), etc.

Combining FIGS. 1 and 2, and referring further to FIG. 3, the control circuit 13 includes a first control circuit 131 and a second control circuit 132, the first control circuit 131 being connected to the redundantly arranged two acceleration sensors 12, the second control circuit 132 being connected to the redundantly arranged two acceleration sensors 12, and the first control circuit 131 being connected to the second control circuit 132.

Specifically, the first control circuit 131 is configured to determine the position information and the collision force information based on the first motion information collected by the redundantly arranged two acceleration sensors 12, and to obtain a corresponding safety control strategy based on the position information and the collision force information.

The second control circuit 132 is configured to determine the position information and the collision force information based on the first motion information collected by the redundantly arranged two acceleration sensors 12, and to obtain a corresponding safety control strategy based on the position information and the collision force information.

The first control circuit 131 and/or the second control circuit 132 cross-validate any one or any combination of the first motion information, the position information, the collision force information, and the safety control strategy, i.e., the first control circuit 131 and the second control circuit 132 may individually cross-validate any one or any combination of the first motion information, the position information, the collision force information, and the safety control strategy; or, either of the first control circuit 131 and the second control circuit 132 may cross-validate any one or any combination of the first motion information, the position information, the collision force information, and the safety control strategy obtained by itself with any one or any combination of the first motion information, the position information, the collision force information, and the safety control strategy obtained by the other.

As shown in FIG. 3, the robotic arm 10 further includes a driving circuit 14, the driving circuit 14 being connected to the control circuit 13 for executing the safety control strategy obtained by the control circuit 13. Specifically, the driving circuit 14 may be connected to the first control circuit 131 and/or the second control circuit 132 to obtain the safety control strategy after cross-validation to control the robotic arm 10 to execute the safety control strategy.

The robotic arm 10 includes multiple MEMS acceleration sensors disposed at multiple joints 11, and is arranged with a control circuit 13 connected to the multiple MEMS acceleration sensors, such that real-time monitoring of the collision detection of the robotic arm 10 may be realized at a low cost by monitoring the first motion information collected by the MEMS acceleration sensors through the control circuit 13. In addition, the control circuit 13 combines the comprehensive analysis of the data from the acceleration sensors 12 of the designated joint 11 to determine the specific direction and regional location where the collision detection occurs, as well as the magnitude of the force at which the collision detection occurs, and then reacts to the occurrence of the collision with a corresponding safety stop.

The robotic arm 10 forms a dual-channel redundant structure by redundantly setting two acceleration sensors 12 at the joint 11, and the control circuit 13 consists of redundantly arranged first control circuit 131 and the second control circuit 132. The robotic arm 10 cross-validates the obtained data by at least one of the first control circuit 131 and the second control circuit 132, and further cross-validates the obtained data between the first control circuit 131 and the second control circuit 132, which may effectively improve the accuracy of the collision detection. Further, the robotic arm 10 satisfies the functional safety standards for industrial robots. The functional safety standards include, but are not limited to, the industrial robot functional safety standard ISO 10218 and the mechanical safety standard ISO 13849-1. The safety function of the industrial robot arranged with the robotic arm 10 is required to specifically satisfy Category 3 and Performance Level d.

Referring to FIG. 4, FIG. 4 is a flowchart of a safety control method of a robotic arm according to some embodiments of the present disclosure. Specifically, the safety control method of the robotic arm 10 may include the following operations at blocks illustrated herein.

At block S11: determining that a collision occurs in the robotic arm, and obtaining a first motion information of a joint through an acceleration sensor.

A control circuit 13 determines that the robotic arm 10 has undergone a collision through sampling information of the acceleration sensor 12, and further obtains the first motion information of the joint 11 through the acceleration sensor 12. The joint 11 may be a joint arranged with the acceleration sensor 12, or another joint 11 disposed in a same joint region as the joint arranged with the acceleration sensor 12.

In some embodiments, continuing to refer to FIG. 5 for the process of specifically determining the collision of the robotic arm 10, FIG. 5 is a first specific flowchart of step S11 in FIG. 4. Specifically, the following steps are included.

At block S111: receiving an interrupt signal generated from the acceleration sensor after detecting the collision.

The acceleration sensor 12 is further configured to collect second motion information of the joint 11 and generate the interrupt signal when it is determined that the second motion information exceeds a threshold value, and the control circuit 13 responds to the interrupt signal to determine that the robotic arm 10 undergoes the collision.

Specifically, the acceleration sensor 12 has a hysteresis threshold set internally through the control circuit 13, and generates the interrupt signal when the second motion information captured by the acceleration sensor 12 exceeds the hysteresis threshold. The control circuit 13, in response to the interrupt signal, determines that a collision has occurred in the robotic arm 10.

Therefore, whether a collision occurs is determined by the acceleration sensor 12 monitoring an acceleration signal in real time; when the collision occurs, the acceleration sensor 12 outputs the interrupt signal to the control circuit 13, which further controls the acceleration sensor 12 to obtain the first motion information of the joint 11 after determining that the collision occurs in the robotic arm 10.

Further, when the control circuit 13 receives the interrupt signal, the control circuit 13 turns on an intensive reading mode and transmits the read first motion information to a main safety board through a safety channel.

In some embodiments, the first motion information obtained by the acceleration sensor 12 includes a variety of data and there may be interference from other signals during transmission. Therefore, after receiving the first motion information output from the acceleration sensor 12, the control circuit 13 may further perform filtering, windowing, and fast Fourier transform (FFT) analysis processing on the first motion information, and transmit the processed data to the main safety board, which will summarize the first motion information transmitted by each joint 11 for fitting calculation.

At block S112: counting a number of times the interrupt signal is received in a motion cycle, and taking the number obtained by accumulation as a number of collisions.

Since the acceleration sensor 12 collects the second motion information of the joints 11 and generates the interrupt signal when it is determined that the second motion information exceeds the threshold value, which in turn causes the control circuit 13 to determine that the collision occurs in the robotic arm 10 through the interrupt signal. therefore, the control circuit 13 may count the number of times that it receives the interrupt signal during the motion cycle and take the number obtained by accumulation as the number of collisions.

Specifically, the motion cycle may be set to be a motion cycle in which the robotic arm 10 completes a complete movement; or, specifically, any one of multiple small motion segments formed by artificially disassembling the movement of the robotic arm 10, and the lengths of the motion cycles of the different motion segments may be the same or different.

In some embodiments, the control circuit 13 may be pre-set with a count threshold, which may be related to the length of the motion cycle. When the control circuit 13 determines that the number obtained by accumulating the interrupt signals is less than the count threshold, i.e., the number of collisions is determined to be less than the count threshold, step S113 is performed; when the control circuit 13 determines that the number obtained by accumulating the interrupt signals is greater than or equal to the count threshold, i.e., the number of collisions is determined to be greater than or equal to the count threshold, step S114 is performed.

At block S113: determining a type of the collision to be a transient collision, in response to the number of collisions being less than a count threshold.

When the control circuit 13, in response to the number of collisions being less than the count threshold, determines that the type of the collision occurring in the robotic arm 10 is a transient collision. Specifically, the count threshold may be two, and when it is determined that the number of collisions of the robotic arm 10 is one, it can be considered that the robotic arm 10 collides with an obstacle and that the obstacle deflects from its original location after the collision occurs, such that the robotic arm 10 does not collide with it for a second time.

At block S114: determining the type of the collision to be a periodic collision, in response to the number of collisions being greater than or equal to the count threshold in the motion cycle.

When the control circuit 13, in response to the number of collisions being greater than or equal to the count threshold, determines that the type of the collision occurring in the robotic arm 10 is a periodic collision. Specifically, when it is determined that the number of collisions of the robotic arm 10 is greater than or equal to the count threshold, it can be considered that the robotic arm 10 collides with an obstacle and that the obstacle is still in the original position after the collision occurs, such that the robotic arm 10 continues to collide with it.

At block S12: determining a position information and a collision force information of the collision occurring based on the first motion information.

The acceleration sensor 12 may be a three-axis MEMS acceleration sensor, and the first motion information obtained by the acceleration sensor may be three-dimensional acceleration data of the joint 11. The control circuit 13 may obtain the position information and the collision force information of the collision occurring in the robotic arm 10 based on the first motion information.

In some embodiments, the control circuit 13 may determine a part of the robotic arm 10 where the collision occurs based on the position information, i.e., the joint region or the joint 11 where the collision occurs; the collision force information may include a magnitude and a direction of a collision force, and the control circuit 13 may determine the magnitude and the direction of the collision force on the part of the robotic arm 10 where the collision occurs based on the collision force information, i.e., determining the specific direction of the collision by calculation.

In some embodiments, the control circuit 13 performs collision three-dimensional matrix solving on the three-dimensional acceleration data of each joint 11 through the main safety board, so as to calculate the region and direction in which the collision specifically occurs. When the control circuit 13 calculates the region in which the collision specifically occurs based on the position information, step S121-step S122 is performed; when the control circuit 13 calculates the direction in which the collision specifically occurs based on the position information, step S123-step S125 is performed.

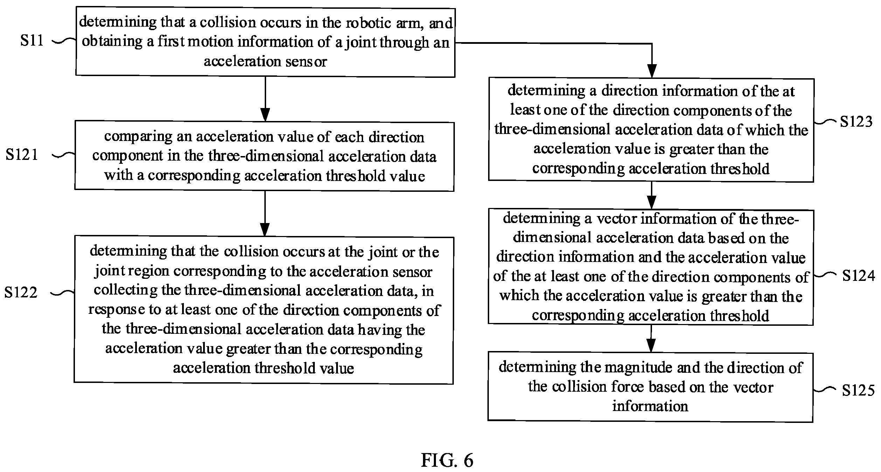

Specifically, continuing to refer to FIG. 6 for the process of determining the position information and the collision force information of the collision occurring specifically based on the first motion information, FIG. 6 is a first specific flowchart of step S12 in FIG. 4. Specifically, the following steps are included.

At block S121: comparing an acceleration value of each direction component in the three-dimensional acceleration data with a corresponding acceleration threshold value.

After the control circuit 13 obtains the three-dimensional acceleration data of each of the multiple joints 11, the three-dimensional acceleration data of the multiple joints 11 is assembled into a three-dimensional matrix, where column data of the three-dimensional matrix is configured to identify data of different joints 11, and row data of the three-dimensional matrix is configured to identify the three-dimensional data of the same joint 11, i.e., the data of the X/Y/Z direction; or the column data of the three-dimensional matrix is configured to identify the three-dimensional data of the same joint 11, and the row data of the three-dimensional matrix is configured to identify the data of different joints 11.

Specifically, the control circuit 13 compares the acceleration value of each direction component in the three-dimensional acceleration data with a corresponding acceleration threshold, where the acceleration thresholds of the different direction components may be the same or different. In some embodiments, the acceleration thresholds of all three direction components may be 0. When there is an acceleration value of one direction component is greater than the corresponding acceleration threshold, i.e., is greater than 0, step S122 is performed; when the acceleration value of each direction component is less than or equal to the corresponding acceleration threshold value, i.e., less than or equal to 0, the control circuit 13 determines that the movement of the robotic arm 10 is normal.

At block S122: determining that the collision occurs at the joint or the joint region corresponding to the acceleration sensor collecting the three-dimensional acceleration data, in response to at least one of the direction components of the three-dimensional acceleration data having the acceleration value greater than the corresponding acceleration threshold value.

The control circuit 13 determines that the joint 11 corresponding to the acceleration value of the direction component greater than the acceleration threshold is in collision, i.e., determining that the joint 11 or the joint region corresponding to the robotic arm 10 is in collision, in response to at least one of the direction components of the three-dimensional acceleration data having the acceleration value greater than the corresponding acceleration threshold, such as the acceleration value in the X direction or the Y direction or the Z direction being greater than the corresponding acceleration threshold; or, the acceleration values in the X direction and the Y direction, acceleration values in the X direction and the Z direction, or acceleration values in the Y direction and the Z direction being greater than the corresponding acceleration thresholds; or, the acceleration values in the X direction, the Y direction, and the Z direction being greater than the corresponding acceleration thresholds.

At block S123: determining a direction information of the at least one of the direction components of the three-dimensional acceleration data of which the acceleration value is greater than the corresponding acceleration threshold.

When the control circuit 13 determines that there exists at least one direction component of which the acceleration value is greater than the acceleration threshold, the control circuit 13 further determines the specific direction information of the direction component, i.e., it determines that it is specifically one or more of the X-direction, the Y-direction, or the Z-direction.

At block S124: determining a vector information of the three-dimensional acceleration data based on the direction information and the acceleration value of the at least one of the direction components of which the acceleration value is greater than the corresponding acceleration threshold.

When the control circuit 13 determines the at least one direction information of the direction component by step S123, and the at least one direction component further includes the acceleration value, the vector information of the three-dimensional acceleration data can be determined by performing vector calculations on the at least one direction component.

Specifically, when the acceleration value of only one direction component is greater than the corresponding acceleration threshold, the direction information corresponding to the direction component is the direction of the collision force, and the acceleration value corresponding to the direction component is the magnitude of the collision force.

When two or more direction components have the acceleration values greater than the corresponding acceleration thresholds, the multiple direction components may be summed to obtain the vector information of the three-dimensional acceleration data.

At block S125: determining the magnitude and the direction of the collision force based on the vector information.

The control circuit 13 obtains the vector information of the three-dimensional acceleration data according to step S124, where the acceleration value and the vector direction included in the vector information are the magnitude and direction of the collision force.

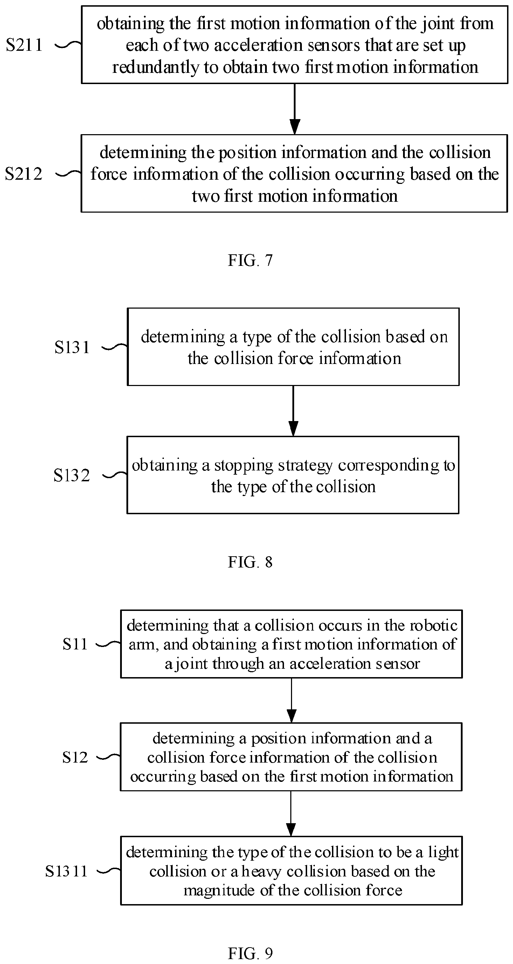

In some embodiments, since the robotic arm 10 may be arranged with two sets of acceleration sensors 12, which are redundantly set up, the control circuit 13 may further obtain the first motion information of the joints 11 through the multiple sets of acceleration sensors 12. Continuing to refer to FIG. 7 for the process of specifically obtaining the first motion information of the joint 11 from the acceleration sensor 12, and determining the position information and the collision force information of the collision occurring based on the first motion information, FIG. 7 is a second specific flowchart of steps S11 and S12 in FIG. 4. Specifically, the following steps are included.

At block S211: obtaining the first motion information of the joint from each of two acceleration sensors that are set up redundantly to obtain two first motion information.

The control circuit 13 may be connected to the redundantly arranged two acceleration sensors 12 respectively to obtain the first motion information of the joint 11 collected by each of the two acceleration sensors 12, for obtaining the two first motion information.

At block S212: determining the position information and the collision force information of the collision occurring based on the two first motion information.

The control circuit 13 may perform the steps of steps S121-step S125 described above for the two first motion information respectively to determine the position information and the collision force information of the collision occurring, and further cross-verify the two calculation results to improve the accuracy of the determination.

At block S13: obtaining a safety control strategy based on the position information and the collision force information, and controlling the robotic arm to execute the safety control strategy.

The control circuit 13 internally stores different safety control strategies; based on the position information and the collision force information of the collision that occurs obtained through step S12, the control circuit 13 obtains the corresponding safety control strategy, and controls the robotic arm 10 to execute the safety control strategy.

In some embodiments, the process of obtaining the safety control strategy specifically based on the position information and the collision force information may be shown in FIG. 8. Continuing to refer to FIG. 8, FIG. 8 is a specific flowchart of step S13 in FIG. 4. Specifically, the following steps are included.

At block S131: determining a type of the collision based on the collision force information.

The collision force information may include the magnitude of the collision force, and the control circuit 13 may determine the type of the collision based on the collision force information, i.e., determine the type of the collision based on the magnitude of the collision force.

Specifically, the main safety board of the control circuit 13 may classify and process the collision occurring in the robotic arm 10 by the magnitude of the collision force, for example, to classify a transient collision or a permanent collision or a periodic collision, or to classify a light collision or a heavy collision. In some embodiments, for the process of determining the type of collision specifically based on the collision force information, continuing to refer to FIG. 9, FIG. 9 is a first specific flowchart of step S131 in FIG. 8. Specifically, the following steps are included.

At block S1311: determining the type of the collision to be a light collision or a heavy collision based on the magnitude of the collision force.

The collision force corresponding to the light collision is less than the collision force corresponding to the heavy collision. In some embodiments, the control circuit 13 may pre-set a collision force threshold, and when the magnitude of the collision force is determined to be greater than or equal to the collision force threshold, the type of the collision is determined to be a heavy collision; and when the magnitude of the collision force is determined to be less than the collision force threshold, the type of the collision is determined to be a light collision.

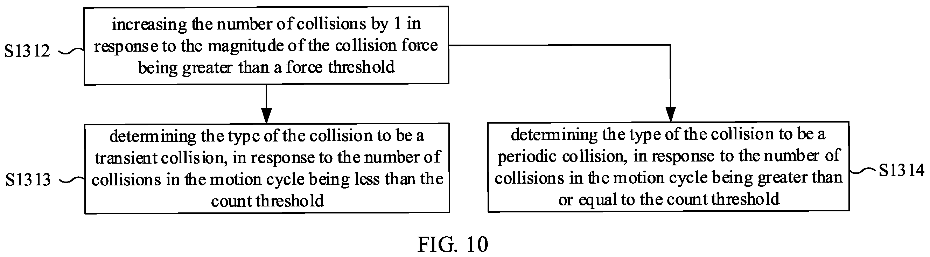

In some embodiments, the process of determining the type of the collision specifically based on the collision force information may be shown in FIG. 10, continuing to refer to FIG. 10,

FIG. 10 is a second specific flowchart of step S131 in FIG. 8. Specifically, the following steps are included.

At block S1312: increasing the number of collisions by 1 in response to the magnitude of the collision force being greater than a force threshold.

The control circuit 13 is pre-set with the force threshold, and when the magnitude of the collision force is determined to be greater than the force threshold, the number of collisions is increased by 1; and all collision forces in the motion cycle are accumulated, and the number of collisions after the accumulation is obtained.

In some embodiments, since the acceleration sensor 12 obtains the first motion information transmitted to the control circuit 13 as an ever-changing waveform, the control circuit 13 may count the number of waveforms of which the waveform amplitude is greater than the force threshold, and accumulate the number of waveforms in order to take the number of waveforms after accumulation as the number of collisions.

Further, the control circuit 13 is pre-set with the count threshold, and when the number of collisions is determined to be less than the count threshold, step S1313 is performed; when the number of collisions is determined to be greater than or equal to the count threshold, step S1314 is performed.

At block S1313: determining the type of the collision to be a transient collision, in response to the number of collisions in the motion cycle being less than the count threshold.

When the control circuit 13 determines that the number of collisions within the motion cycle is less than the count threshold, it is determined that the type of collision that occurs is a transient collision.

At block S1314: determining the type of the collision to be a periodic collision, in response to the number of collisions in the motion cycle being greater than or equal to the count threshold.

When the control circuit 13 determines that the number of collisions within a motion cycle is greater than or equal to the count threshold, it is determined that the type of collision that occurred is a periodic collision.

Further, the control circuit 13 may further set a second count threshold, and when the number of collisions in the motion cycle is determined to be greater than the count threshold, it is further determined whether the number of collisions is greater than the second count threshold; when the number of collisions is determined to be greater than or equal to the second count threshold, it is determined that the type of collision that occurs is a permanent collision.

At block S132: obtaining a stopping strategy corresponding to the type of the collision.

The control circuit 13 stores the safety control strategy corresponding to the type of the collision, and executes the corresponding safety control strategy according to the type of the collision obtained by the classification of steps S1311-steps S1314, which may specifically be to execute the corresponding stopping strategy, such as an STO stopping type or an SS1 stopping type or an SS2 stopping type.

Specifically, when the main safety board of the control circuit 13 determines that the type of the collision that occurs is a light collision or a transient collision that is slight and far below the range of the human body force injury, it may adopt the stopping strategy of the SS2 stopping type; when it determines that the type of the collision that occurs is a heavy collision or a collision that exceeds the range of the collision force of the human body part, it may adopt the stopping strategy of the SS1 stopping type or the STO stopping type; and when it determines that the type of the collision that occurs is a permanent collision or a cyclic collision, the stopping strategy of the STO stopping type or the SS1 stopping type may be adopted and the robot operator may be prompted.

In some embodiments, the safety control strategy further includes troubleshooting the source of the collision, and after the control circuit 13 determines the position information of the robotic arm 10 where the collision occurs according to step S12, the source of the collision may be determined and troubleshot based on the position information. In some embodiments, the troubleshooting the source of the collision may include determining and removing an obstacle where the collision occurs.

In some embodiments, since the control circuit 13 may include the first control circuit 131 and the second control circuit 132, any one of the first motion information obtained at step S11, the position information obtained at step S12, the collision force information obtained at step S12, and the safety control strategy obtained at step S132 may be further cross-validated by the first control circuit 131 and/or the second control circuit 132 or any combination thereof.

The present disclosure obtains corresponding first motion information by acceleration sensors 12 disposed at multiple joints 11 of the robotic arm 10, and obtains second motion information of the joints 11 by the acceleration sensors 12 before obtaining the first motion information, and generates an interrupt signal when it is determined that the second motion information exceeds a threshold value, thereby realizing real-time monitoring of the collision detection. Moreover, data analysis based on the collected first motion information can calculate the region as well as the magnitude of the collision, realizing accurate analysis of the collision detection. Further, the present disclosure further realizes cross-validation of data by redundantly setting the acceleration sensors 12 and the first control circuit 131 and the second control circuit 132. Therefore, the safety control method of the present disclosure is capable of realizing highly accurate as well as highly sensitive collision detection, and the collaborative robot to which the safety control method of the present disclosure is applied satisfies industrial robot functional safety standards. Among them, the industrial robot functional safety standards include, but are not limited to, the industrial robot functional safety standard ISO 10218 and the mechanical safety standard ISO 13849-1.

The above is only examples of the present disclosure, and is not intended to limit the scope of the present disclosure. Any equivalent structure or equivalent process transformation utilizing the contents of the specification and the accompanying drawings of the present disclosure, or directly or indirectly utilized in other related technical fields, are all reasonably included in the scope of the present disclosure.

## Claims

**1.** A safety control method of a robotic arm; **characterized in that** the robotic arm comprises a plurality of joints and a plurality of acceleration sensors, and different the plurality of acceleration sensors are arranged on different the plurality of joints; the method comprises:
determining that a collision occurs in the robotic arm, and obtaining a first motion information of each joint through a corresponding acceleration sensor;
determining a position information and a collision force information of the collision occurring based on the first motion information; and
obtaining a safety control strategy based on the position information and the collision force information, and controlling the robotic arm to execute the safety control strategy.

**2.** The method according to claim 1, wherein the determining that a collision occurs in the robotic arm comprises:
receiving an interrupt signal generated from the corresponding acceleration sensor after detecting the collision.

**3.** The method according to claim 1, wherein the first motion information comprises three-dimensional acceleration data of the joint, and the determining the position information of the collision occurring based on the first motion information comprises:
comparing an acceleration value of each direction component in the three-dimensional acceleration data with a corresponding acceleration threshold value; and
determining that the collision occurs at the joint or a joint region corresponding to the acceleration sensor collecting the three-dimensional acceleration data, in response to at least one of the direction components of the three-dimensional acceleration data having the acceleration value greater than the corresponding acceleration threshold value.

**4.** The method according to claim 1, wherein the first motion information comprises three-dimensional acceleration data of the joint, the collision force information comprises a magnitude and a direction of a collision force of the collision, and the determining the position information of the collision occurring based on the first motion information comprises:
determining a direction information of the at least one of the direction components of the three-dimensional acceleration data of which the acceleration value is greater than the corresponding acceleration threshold;
determining a vector information of the three-dimensional acceleration data based on the direction information and the acceleration value of the at least one of the direction components of which the acceleration value is greater than the corresponding acceleration threshold; and
determining the magnitude and the direction of the collision force based on the vector information.

**5.** The method according to claim 1, wherein the safety control strategy comprises a stopping strategy, and the obtaining a safety control strategy based on the position information and the collision force information comprises:
determining a type of the collision based on the collision force information; and
obtaining the stopping strategy corresponding to the type of the collision.

**6.** The method according to claim 5, wherein the collision force information comprises a magnitude of a collision force of the collision, and the determining a type of the collision based on the collision force information comprises:
determining the type of the collision to be a light collision or a heavy collision based on the magnitude of the collision force; wherein the magnitude of the collision force corresponding to the light collision is less than the magnitude of the collision force corresponding to the heavy collision.

**7.** The method according to claim 5, wherein the collision force information comprises a magnitude of a collision force of the collision, and the determining a type of the collision based on the collision force information comprises:
increasing a number of collisions by 1 in response to the magnitude of the collision force being greater than a force threshold.

**8.** The method according to claim 5, wherein the safety control strategy further comprises: troubleshooting a source of the collision, and the obtaining a safety control strategy based on the position information and the collision force information further comprises:
determining the source of the collision based on the position information; and
troubleshooting the source of the collision.

**9.** The method according to claim 2, further comprising:
counting a number of times the interrupt signal is received in a motion cycle, and taking the number obtained by accumulation as a number of collisions;
determining a type of the collision to be a transient collision, in response to the number of collisions being less than a count threshold; and
determining the type of the collision to be a periodic collision, in response to the number of collisions being greater than or equal to the count threshold in the motion cycle.

**10.** The method according to any one of claims 1-9, wherein the plurality of acceleration sensors comprise two sets of acceleration sensors that are redundantly set up, and the obtaining a first motion information of each joint through a corresponding acceleration sensor comprises:
obtaining the first motion information of the joint from each of two corresponding acceleration sensors that are set up redundantly, to obtain two the first motion information; and
determining the position information and the collision force information of the collision occurring based on the two first motion information.

**12.** A robotic arm, comprising:
a plurality of joints, configured to realize a movement of the robotic arm;
a plurality of acceleration sensors, configured to collect first motion information of the plurality of joints; wherein different the plurality of acceleration sensors are arranged on different the plurality of joints; and
a control circuit, connected to the plurality of joints, and configured to perform the method according to any one of claims 1-11.

**13.** The robotic arm according to claim 12, wherein each acceleration sensor is configured to collect a second motion information of a corresponding joint and generate an interrupt signal in response to determining that the second motion information exceeds a threshold value, and the control circuit is configured to determine that a collision occurs in the robotic arm in response to the interrupt signal.

**14.** The robotic arm according to claim 12, wherein each joint is arranged with a corresponding acceleration sensor or each joint region is arranged with a corresponding acceleration sensor, wherein the joint region comprises neighboring ones of the plurality of joints.

**15.** The robotic arm according to claim 12, wherein the plurality of acceleration sensors comprise two sets of acceleration sensors that are redundantly set up; the control circuit is configured to obtain the first motion information of each joint from each of two corresponding acceleration sensors that are set up redundantly, to obtain two the first motion information, and determine the position information and the collision force information of the collision occurring based on the two first motion information.

**16.** The robotic arm according to claim 15, wherein the control circuit comprises:
a first control circuit, connected to the two corresponding acceleration sensors that are set up redundantly to perform the method according to any one of claims 1-11; and
a second control circuit, connected to the two corresponding acceleration sensors that are set up redundantly to perform the method according to any one of claims 1-11;
wherein the first control circuit and/or the second control circuit is configured to cross-validate either or any combination of the first motion information, the position information, the collision force information, and the safety control strategy.

**17.** The robotic arm according to claim 12, further comprising:
a driving circuit, connected to the control circuit and configured to perform the safety control strategy.
